Europäisches Patentamt

European Patent Office

Office européen des brevets

Publication number: **0 234 789**
**A2**

# EUROPEAN PATENT APPLICATION

Application number: 87301098.7

Date of filing: 09.02.87

Int. Cl.⁴: **H 01 G 13/02**
**B 65 H 23/195**

Priority: 27.02.86 IT 334386

Date of publication of application:
02.09.87 Bulletin 87/36

Designated Contracting States:
BE CH DE FR IT LI NL

Applicant: ARCOTRONICS ITALIA S.P.A.
Via S. Lorenzo 1/7
I-40037 Sasso Marconi (Bologna) (IT)

Inventor: Pirazzoli, Ettore
Via Spina Nbr 1
Bologna (IT)

Representative: Gilding, Martin John et al
Emhart Patents Department P.O. Box 88 Ross Walk
Belgrave Leicester LE4 5BX (GB)

**Machine for winding films on a non-circular support.**

The machine produces spools of dielectric films, metallised on one side or with metal films intercalated between them, around a support of non-circular section 2. The films pass around two fixed rollers 3a and 3b, supported for rotation by a structure 10, and a compensating roller 4, supported by the free end of a bar 5 hinged to the structure 10. The bar 5 is acted on by a cam 6, driven in rotation synchronously with the support 2, so that the compensating roller 4 is moved to compensate for the variations in speed of take up of the films 1 by the support 2 and thus to maintain a constant speed of take off of the films from feed spools situated prior to the fixed rollers 3a and 3b.

FIG 2a

# Description

## MACHINE FOR WINDING FILMS ON A NON-CIRCULAR SUPPORT

This invention is for use in the technical field involving the large scale construction of layered, or stacked, capacitors. Processes are known for obtaining such capacitors, which provide for the spooling of several dielectric films, metallised on one of their faces or with metal films intercalated between them, on a large diameter drum, and for the sub-division of the spool thereby obtained into a number of single capacitors, by radial cuts.

The disadvantages arising from the use of this process have become apparent, caused by the operating difficulties which result from the processing of the curving lines of film, and the ease with which after a certain time flaking can occur between the layers of the capacitor, as a result of internal tensions caused by the circular section form of the capacitor itself. These led the present Applicant to devise a new process to obtain capacitors of a stacked type (see European Patent Specification No. 0194044).

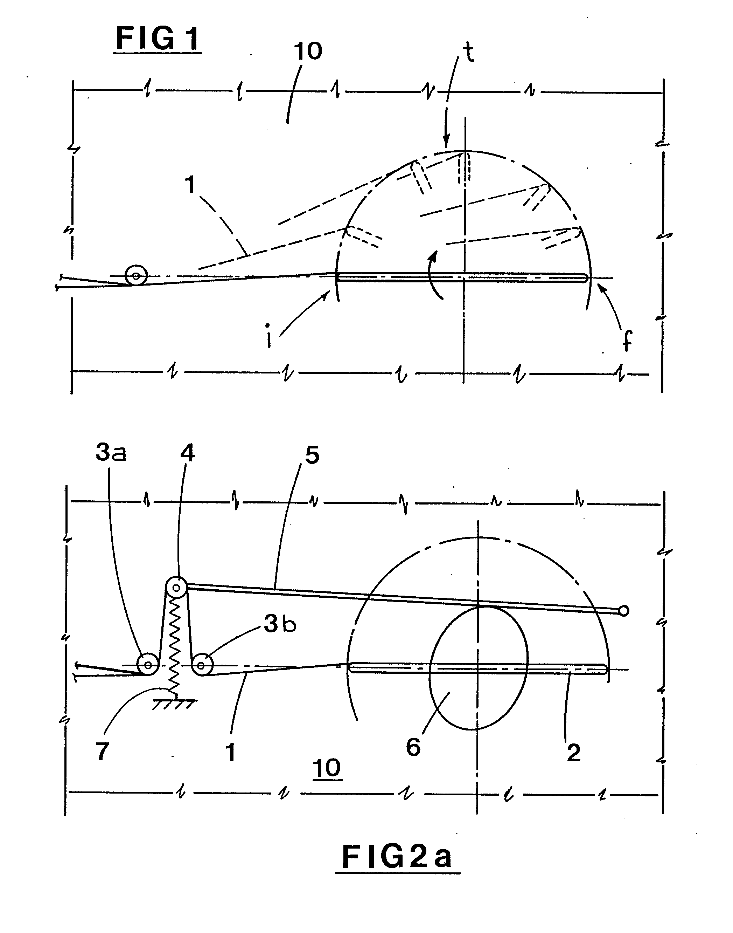

This latter process, which is illustrated by Figure 1, provides for the simultaneous spooling of several films around a support with a polygon shape, so as to obtain a succession of stretches with straight lines from which, by cutting, it is possible to obtain a capacitive strip which can then be sub-divided into a number of individual capacitors.

The support, to which are fixed, using known techniques, the heads of the films to be spooled, is made to rotate in such a way as to draw off the films from feed spools winding the films on to itself with layers on top of one another.

The constant rotating speed of the support is not, however, matched by a uniform speed of take off of the films from the respective feed spools.

In fact, with reference to figure 1, when an edge of the support intercepts the films (position i) this causes a rapid increase in the speed of take off of the films. The speed of take off increases until such time as the films find themselves at a tangent to the circular trajectory described by the same edge (position t) and then decreases until such time as a subsequent edge intercepts the films (position f). The speed of rotation of the support must therefore be lower the less the number of sides of the support itself, in order to avoid the mechanical stress which would result to the films and which might damage them.

In order to increase the operating speed, it is therefore advisable to increase the number of sides of the support, reducing the importance of variations in the speed of take off but complicating the subsequent operations, for example the sub-division of the spool into several capacitive strips.

The aforesaid has an unfavourable effect on large scale production and limits productivity.

The purpose of this invention is to create a machine which makes it possible to obtain spools of a non circular section, with dielectric films, metallised or with metallised films intercalated between them, operating at high speed independently of the number of sides of the polygon section support, while maintaining the speed of take off of the films from the feed spools substantially at an unvaried rate.

This purpose is achieved by means of a machine for winding films on a non-circular support to form a spool which can be sub-divided into a number of capacitors of the stacked type, the machine comprising a support of non-circular section supported for rotation at a constant speed so that an assembly of films can be wound on to the support by the rotation thereof drawing the films off from feed spools; characterised in that the machine also comprises at least two fixed rollers supported for rotation laterally of and in parallel alignment with the axis of rotation of the support so that the films pass around the fixed rollers in passing from the feed spools to the support; a bar extending laterally of said axis and mounted for pivoting movement about an axis parallel to said axis; at least one compensating roller supported for rotation by said bar laterally of and parallel to said fixed rollers, said films passing around said compensating roller in passing between said fixed rollers; a cam rotatable in synchronisation with said support and engaging said bar so as to pivot the bar and move the compensating roller in synchronisation with the rotation of said support; and means acting to maintain said bar in contact with said cam, the cam having a profile such that, during those periods of the rotation of the support when a smaller amount of film is required, the compensating roller is moved away from the fixed rollers with a consequent accumulation of film between the fixed rollers and the compensating roller and, during those periods when a greater amount of film is required, the compensating roller is moved towards the fixed rollers with a consequent restitution of previously accumulated film, and the speed at which the film is drawn off from the feed spools is substantially constant.

The characteristics of the invention, which do not emerge from what is stated above, are set out below, with particular reference to the attached pages of drawings, in which:

Figure 1 shows in schematic form a machine according to European Patent Specification No. 0194044 illustrating the various phases of spooling of the films on to the support without provision for the use of the fixed rollers and the compensating roller;

Figures 2a, b, c show in schematic form three successive operating phases of the machine which is the subject of this invention; and

Figure 3 illustrates a variant construction of the machine.

Referring to these figures, 1 shows the assembly made up of two dielectric films, metallised on one of their sides, placed on top of one another and suitably offset, in accordance with known techniques. The metallising of the two films leaves free one side over the whole length of the films themselves; each of the two edges affected by the metallisation thus constitute a corresponding longitudinal edge of the said assembly 1.

As an alternative it is possible to use dielectric films with metal films, intercalated between the same dielectric films, suitably offset. 2 indicates a support of non-circular section in the form of a rod which is supported for rotation, at a central portion thereof, by a support structure 10, partially illustrated in the figures. The rod 2 is driven in rotation at constant speed around its own transversal axis by known processes. It is, however, possible to utilise supports with other cross-sections provided that the cross-section is in the shape of a regular polygon.

Two fixed rollers 3a and 3b, of the machine, supported for rotation by the structure 10, are positioned laterally of and in parallel alignment with the axis of rotation of the rod 2. The films 1 pass around the fixed rollers 3a and 3b in passing from the feed spools to the support 2.

A bar 5 of the machine is mounted for pivoting movement about an axis extending parallel to said axis of the support 2 by having one end hinged to the structure 10. The bar 5 extends laterally in relation to the axis of the rod 2 so that its other end is adjacent the fixed rollers 3a,3b. The free end of the bar 5 supports for rotation a compensating roller 4, laterally of and parallel to the fixed rollers, in such a position that the vertical symmetrical plane of the compensating roller, along which lies the axis of the same, is located in an intermediate position in relation to the fixed rollers 3a and 3b. Thus, the films 1 pass around said compensating roller 4 in passing between the fixed rollers 3a and 3b.

A cam 6 of the machine is rotatable in synchronisation with said support 2 and engages an intermediate point of the bar 5 so as to pivot the bar 5 about its hinged end and move the compensating roller 4 in synchronisation with the rotation of the support 2. The cam 6 is mounted coaxially with the support 2.

The rotation of the cam 6 therefore brings about the oscillation of the compensating roller 4 in opposite directions H1 and H2, respectively going away from and coming nearer to the fixed rollers 3a and 3b, in phase relation with the rotation of the rod.

In particular the movement of coming nearer H2 is caused by resilient means in the form of a spring 7 acting between the bar 5 and a fixed structure to maintain the bar 5 in contact with the cam 6. The spring 7 is tensioned during the movement of the direction H1 of going away of the compensating roller.

Another function of the spring 7 is to dampen the execution of the upwards movement of the bar 5, caused by the inertia of the mass of the bar and of the roller in movement, when these reach their highest point.

The films are fed underneath the two fixed rollers 3a and 3b and above the compensating roller 4, in such a way as to be affected by the oscillation of the latter.

The cam 6 has a profile such that, during those periods of the rotation of the support 2 when a smaller amount of film 1 is required, the compensating roller 4 is moved away from the fixed rollers 3a and 3b with a consequent accumulation of film in the stretches between the fixed rollers and the compensating roller. During those periods when a greater amount of film is required, the compensating roller 4 is moved towards the fixed rollers 3a and 3b with a consequent restitution of the previously accumulated film.

In other words when, during the rotation of the rod, the speed of the films, in the stretch subsequent to the rollers, exceeds the average figure for the speed, at the same point, relative to the rotation of the rod 2, the cam 6 allows the bar 5 to lower. This condition is found for a brief period immediately preceding and for a brief period immediately following the moment when the films find themselves at a tangent to the circumference described by the end of the rod 2.

The coming nearer of the compensating roller 4 to the fixed rollers 3a and 3b increases the quantity of film supplied to the rod, shortening the stretches found between the compensating roller and the fixed rollers. Vice versa, when the speed of the films in the stretch below the rollers falls below the average, the cam raises the bar 5 and the consequent movement away of the compensating roller 4 from the fixed rollers 3a and 3b again collects up the films in the stretches between the fixed rollers and the compensating roller reducing the quantity supplied to the rod 2.

Therefore during the spooling phases the speed of the films prior to the fixed rollers and the compensating roller remains substantially constant so that the film is drawn off from the feed spools at substantially constant speed.

The films are thus unwound from the feed spools, as a result of the rotation of the rod, with a uniform speed in time, and without being subjected to mechanical strains which could have an adverse effect on them, in the phase in which the support requires a greater quantity of film, or subject to excessive relaxations in the opposite case.

This makes it possible to spool films on to a support of a shape which is particularly advantageous for subsequent operations, which is a rod 2, however maintaining a high operating speed which benefits productivity. The profile of the cam 6 is suitably an ellipse.

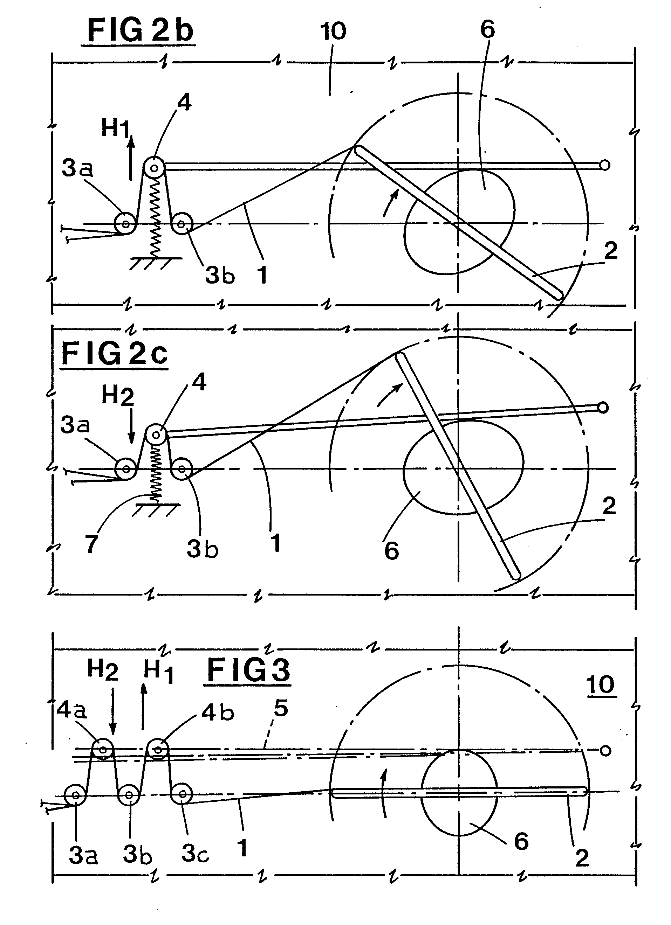

In the variant machine shown in Figure 3, three fixed rollers, 3a, 3b, 3c are provided, in alignment, and two compensating rollers 4a and 4b, supported for rotation by the free end of the bar 5, each centred in relation to a corresponding pair of fixed rollers situated below. The machine operates as in the previous case, but with a doubling of the variable stretch between the fixed rollers and the compensating rollers.

This makes it possible to halve the travel of the bar 5 with the consequent advantages of a limited effect of the inertia of the masses in movement. In addition the use is possible of a support of a regular polygon type with more sides than that described above, suitably adjusting the profile of the cam 6.

**Claims**

1. A machine for winding films on a non-circular support to form a spool which can be sub-divided into a number of capacitors of the stacked type, the machine comprising a support (2) of non-circular section supported for rotation at a constant speed so that an assembly of films (1) can be wound on to the support (2) by the rotation thereof drawing the films off from feed spools;

characterised in that the machine also comprises at least two fixed rollers (3a,3b;3a,3b,3c) supported for rotation laterally of and in parallel alignment with the axis of rotation of the support (2) so that the films pass around the fixed rollers in passing from the feed spools to the support (2); a bar (5) extending laterally of said axis and mounted for pivoting movement about an axis parallel to said axis; at least one compensating roller (4;4a,4b) supported for rotation by said bar (5) laterally of and parallel to said fixed rollers (3a,3b;3a,3b,3c) said films (1) passing around said compensating roller in passing between said fixed rollers; a cam (6) rotatable in synchronisation with said support (2) and engaging said bar (5) so as to pivot the bar and move the compensating roller (4;4a,4b) in synchronisation with the rotation of said support (2); and means (7) acting to maintain said bar (5) in contact with said cam (6), the cam (6) having a profile such that, during those periods of the rotation of the support (2) when a smaller amount of film (1) is required, the compensating roller (4;4a,4b) is moved away from the fixed rollers (3a,3b;3a,3b,3c) with a consequent accumulation of film between the fixed rollers and the compensating roller and during those periods when a greater amount of film is required, the compensating roller (4) is moved towards the fixed rollers with a consequent restitution of previously accumulated film, and the speed at which the film is drawn off from the feed spools is substantially constant.

2. A machine according to Claim 1, characterised in that said support (2) is in the form of a rod.

3. A machine according to Claim 1, characterised in that the support (2) has a cross-section in the shape of a regular polygon.

4. A machine according to any one of Claims 1 to 3, characterised in that said bar (5) is pivotally mounted at one end thereof on supporting structure (10) which supports said support (2), and the compensating roller (4;4a,4b) is supported at the other end of said bar (5).

5. A machine according to any one of Claims 1 to 4, characterised in that there are three fixed rollers (3a,3b,3c) and two compensating rollers (4a,4b) supported by said bar (5) so that there are four stretches of film between the fixed rollers and the compensating rollers.

6. A machine according to any one of Claims 1 to 5, characterised in that said maintaining means (7) comprises resilient means acting between said bar (5) and a fixed structure.

7. A machine according to any one of Claims 1 to 6, characterised in that the profile of said cam is an ellipse.

**FIG 1**

10

t

1

i

f

**3a** **4** **5**

**3b**

**7** **1** **2**

6

10

**FIG2a**

FIG 2b

FIG 2c

FIG 3